# FASCICULE DE BREVET EUROPEEN

(11) **EP 3 357 299 B1**
(45) Date de publication et mention de la délivrance du brevet: **18.03.2020**
(21) Numéro de dépôt: 16788162.2
(22) Date de dépôt: 30.09.2016
(51) Int. Cl.: H04W 88/06

(54) **PROCÉDÉ DE CONTRÔLE, PAR UN TERMINAL ET UN SERVEUR, D'UN MODE VEILLE D'UN MODULE DE COMMUNICATION DUDIT TERMINAL**
VERFAHREN ZUR STEUERUNG, ÜBER EIN ENDGERÄT UND EINEN SERVER, DES SCHLAFMODUS EINES KOMMUNIKATIONSMODULS DES BESAGTEN ENDGERÄTS
METHOD FOR CONTROLLING, VIA A TERMINAL AND A SERVER, A SLEEP MODE OF A COMMUNICATION MODULE OF SAID TERMINAL

(30) Priorité: 30.09.2015 FR 1559262
(43) Date de publication de la demande: 08.08.2018
(73) Titulaire: SIGFOX, 31670 Labège (FR)
(72) Inventeur: MALLART, Raoul, 75012 Paris (FR); DRILHON, Xavier, 92210 Saint Cloud (FR)
(74) Mandataire: Ipside
(86) Numéro de dépôt international: PCT/FR2016/052509
(87) Numéro de publication internationale: WO 2017/055772

(56) Documents cités:
- EP-A1- 2 755 429
- EP-A1- 2 884 812
- EP-A2- 2 550 817

## Description

### DOMAINE TECHNIQUE

La présente invention appartient au domaine des télécommunications, et concerne plus particulièrement la gestion de la consommation électrique d'un terminal d'un système de communication sans fil.

### ÉTAT DE LA TECHNIQUE

La présente invention trouve une application particulièrement avantageuse, bien que nullement limitative, dans les systèmes de communication sans fil pour des applications du type M2M (acronyme anglo-saxon pour « Machine-to-Machine ») ou du type « Internet des objets » (« Internet of Things » ou IoT dans la littérature anglo-saxonne).

Dans le contexte par exemple de l'IoT, chaque objet de la vie de tous les jours a vocation à devenir un objet communiquant, et est à cet effet équipé d'un terminal adapté à émettre des données à destination d'un réseau d'accès sans fil d'un système de communication sans fil.

Dans un tel contexte, il est important de disposer de solutions qui soient à la fois faible coût (donc faible complexité) et en même temps faiblement consommatrices en énergie électrique. Ceci permet par exemple de rendre communiquant beaucoup d'objets de la vie de tous les jours sans impacter leur coût de production de façon significative, et surtout sans trop impacter leur autonomie lorsqu'ils sont opérés sur batterie.

On connaît des systèmes de communication sans fil qui sont optimisés pour des applications du type M2M ou IoT, qui permettent de desservir simultanément, dans une zone donnée, un très grand nombre de terminaux équipés de modules de communication adaptés, lesquels présentent en outre une consommation électrique très faible.

Par exemple, on connaît des systèmes de communication sans fil à bande ultra étroite. Par « bande ultra étroite » (« Ultra Narrow Band » ou UNB dans la littérature anglo-saxonne), on entend que le spectre fréquentiel instantané des signaux échangés entre les terminaux et le réseau d'accès sans fil est de largeur fréquentielle inférieure à deux kilohertz, voire inférieure à un kilohertz. L'émission de tels signaux peut être réalisée avec une consommation électrique très réduite. La consommation électrique est également réduite par le fait que les terminaux émettent des signaux sans avoir à s'associer préalablement à une ou plusieurs stations de base dudit réseau d'accès sans fil. Ainsi, le terminal n'a pas besoin de réaliser des mesures régulières pour déterminer la station de base la plus appropriée pour recevoir ses signaux. La complexité repose sur le réseau d'accès sans fil, qui doit être capable de recevoir des signaux pouvant être émis à des instants arbitraires et sur des fréquences arbitraires.

De tels systèmes de communication sans fil UNB présentent donc, côté terminal, une consommation électrique parfaitement adaptée pour des applications du type M2M ou IoT.

Par contre, l'utilisation de signaux à bande ultra étroite limite le débit maximal qui peut être atteint pour l'échange de données entre un terminal et le réseau d'accès sans fil d'un système de communication sans fil UNB.

Si une telle limitation du débit maximal ne pose pas forcément de problème pour la plupart des applications M2M et IoT, il peut cependant exister des scénarios pour lesquels il est nécessaire de pouvoir disposer d'un débit maximal plus important, afin notamment de pouvoir échanger plus simplement une quantité de données importantes entre ledit terminal et le réseau d'accès sans fil. Par exemple, sur un lien descendant du réseau d'accès sans fil vers le terminal, un débit maximal plus important permettrait de transférer une mise à jour d'un micro-logiciel (« firmware » dans la littérature anglo-saxonne) dudit terminal.

On connaît de nombreux systèmes de communication sans fil qui présentent un débit maximal très supérieur à celui des systèmes de communication sans fil UNB.

On peut citer notamment les systèmes de communication sans fil GPRS, EDGE, UMTS, HSPA, HSPA+, LTE, CDMA2000, etc., qui peuvent être qualifiés de « haut débit » par rapport aux systèmes de communication sans fil UNB qui, a contrario, peuvent être qualifiés de « bas débit ».

Toutefois, un inconvénient des systèmes de communication sans fil haut débit réside dans le fait qu'ils s'accompagnent, côté terminal, d'une consommation électrique qui peut s'avérer trop importante pour des objets opérés sur batterie. En outre, le nombre de terminaux pouvant être connectés simultanément, dans une zone donnée, à un système de communication sans fil haut débit est généralement limité et très inférieur au nombre de terminaux pouvant être desservis, dans cette même zone, par un système de communication sans fil bas débit. De plus, le coût associé est généralement trop important pour des applications M2M ou IoT, dans la mesure où chaque terminal doit disposer d'un code d'identification personnel, par exemple un numéro d'abonné IMSI (« International Mobile Subscriber Identity » dans la littérature anglo-saxonne), lui permettant de se connecter au réseau d'accès sans fil du système de communication sans fil haut débit.

Pour bénéficier des avantages respectifs offerts par les systèmes de communication sans fil bas débit (par exemple UNB) et par les systèmes de communication sans fil haut débit (GPRS, EDGE, UMTS, HSPA, HSPA+, LTE, CDMA2000, etc.), il est envisagé d'équiper certains terminaux de deux modules de communication, à savoir un module de communication bas débit et un module de communication haut débit. Si la consommation électrique du module de communication haut débit peut alors être réduite par une utilisation limitée aux seuls échanges nécessitant un débit élevé, elle peut malgré tout demeurer trop importante pour certains objets opérés sur batterie, en particulier si l'autonomie visée est importante, de l'ordre de quelques années. En outre, le coût associé à l'utilisation du module de communication haut débit reste trop important pour des applications du type M2M ou IoT.

La demande de brevet EP 2755429 A1 propose une solution permettant de réduire la consommation électrique d'un tel terminal, dans laquelle le module de communication haut débit est placé en mode veille et est réveillé au moyen du module de communication bas débit. Toutefois, cette solution n'adresse pas le problème de coût associé à l'utilisation d'un module de communication haut débit pour des applications du type M2M ou IoT.

### EXPOSÉ DE L'INVENTION

La présente invention a pour objectif de remédier à tout ou partie des limitations des solutions de l'art antérieur, notamment celles exposées ci-avant, en proposant une solution qui permette à la fois de réduire la consommation électrique du module de communication haut débit du terminal et de réduire le coût associé à l'utilisation dudit module de communication haut débit.

A cet effet, et selon un premier aspect, l'invention concerne un procédé de contrôle, par un terminal, d'un mode veille d'un premier module de communication dudit terminal, adapté à échanger des données avec un premier réseau d'accès sans fil, ledit terminal comportant en outre un second module de communication adapté à échanger des données avec un second réseau d'accès sans fil, de débit maximal inférieur à un débit maximal dudit premier module de communication. En outre, ledit terminal appartenant à un groupe de terminaux partageant un même code d'identification pour se connecter audit premier réseau d'accès sans fil, ledit procédé de contrôle comporte, lorsque le premier module de communication est en mode veille :
- l'écoute, au moyen du second module de communication, d'un lien descendant entre le second réseau d'accès sans fil et le terminal,
- lorsque le terminal reçoit, au moyen du second module de communication, une requête d'activation, émise par un serveur relié au second réseau d'accès sans fil, indiquant la disponibilité du code d'identification : l'activation du premier module de communication au cours de laquelle le premier module de communication se connecte au premier réseau d'accès sans fil en utilisant ledit code d'identification.

Ainsi, le terminal écoute le lien descendant au moyen du second module de communication. Si le serveur émet une requête d'activation, le terminal active le premier module de communication, qui quitte alors le mode veille et est disponible pour échanger des données avec le premier réseau d'accès sans fil. Dans le cas contraire, le premier module de communication reste en mode veille.

Par conséquent, l'activation du premier module de communication est contrôlée à distance par le serveur. De telles dispositions sont avantageuses en ce qu'un serveur distant du terminal peut avoir accès à des informations auxquelles le terminal n'a pas accès, susceptibles d'être prises en compte pour décider si le premier module de communication doit être activé.

En particulier, afin de réduire le coût associé à l'utilisation du premier module de communication, celui-ci utilise, pour se connecter au premier réseau d'accès sans fil, un code d'identification qui est partagé par un groupe de terminaux. On comprend en effet qu'une telle solution est plus économique que les solutions de l'art antérieur, dans lesquelles chaque terminal doit disposer d'un code d'identification personnel. Par contre, le premier module de communication dudit terminal ne pourra pas se connecter au premier réseau d'accès sans fil si le code d'identification partagé est déjà utilisé par un autre terminal du groupe, et il est donc inutile dans un tel cas d'activer le premier module de communication. Avantageusement, le serveur contrôle à distance l'activation du premier module de communication du terminal en fonction de la disponibilité ou non dudit code d'identification partagé.

Par exemple, le serveur peut savoir si une quantité importante de données, par exemple une mise à jour du micro-logiciel du terminal, doit être transférée audit terminal par l'intermédiaire du premier réseau d'accès sans fil. Suivant un autre exemple, il est possible que le nombre de terminaux déjà connectés au premier réseau d'accès sans fil soit égal à un nombre maximal de terminaux pouvant être connectés simultanément. Dans un tel cas, il est inutile d'activer le premier module de communication, même si ledit terminal a une quantité importante de données à émettre, puisque ledit terminal ne pourra pas se connecter au premier réseau d'accès sans fil.

Dans des modes particuliers de mise en œuvre, le procédé de contrôle peut comporter en outre l'une ou plusieurs des caractéristiques suivantes, prises isolément ou selon toutes les combinaisons techniquement possibles.

Dans des modes particuliers de mise en œuvre, le code d'identification partagé par le groupe de terminaux est un numéro d'abonné IMSI.

Dans des modes particuliers de mise en œuvre, ledit groupe de terminaux partageant plusieurs codes d'identification, la requête d'activation reçue comporte une indication du code d'identification disponible parmi lesdits codes d'identification partagés et, au cours de l'activation, le premier module de communication se connecte au premier réseau d'accès sans fil en utilisant le code d'identification indiqué dans la requête d'activation reçue du serveur.

Dans des modes particuliers de mise en œuvre, le procédé de contrôle de mode veille par le terminal comporte :
- l'évaluation d'un critère d'émission de requête de confirmation d'activation du premier module de communication,
- lorsque le critère d'émission de requête de confirmation d'activation est vérifié : l'émission, au moyen du second module de communication, d'une requête de confirmation d'activation à destination du serveur,
le terminal écoutant le lien descendant après avoir émis la requête de confirmation d'activation, dans l'attente d'une requête d'activation émise par le serveur en réponse à ladite requête de confirmation d'activation.

Dans un tel cas, bien que l'activation du premier module de communication soit contrôlée à distance par le serveur, la procédure qui conduit ou non à l'activation dudit premier module de communication est initiée par le terminal, par l'émission de la requête de confirmation d'activation. De telles dispositions sont avantageuses en ce que la consommation électrique associée à l'utilisation du second module de communication peut également être maîtrisée. En effet, il n'est pas nécessaire d'écouter en permanence le lien descendant dans l'attente d'une requête d'activation, puisque celle-ci est émise en réponse à une requête de confirmation d'activation émise par le terminal. Par conséquent, le second module de communication peut également être souvent placé en mode veille.

Dans des modes particuliers de mise en œuvre, l'évaluation du critère d'émission de requête de confirmation d'activation comporte la comparaison de l'instant d'évaluation dudit critère d'émission de requête de confirmation d'activation à une date prédéterminée.

Dans des modes particuliers de mise en œuvre, l'évaluation du critère d'émission de requête de confirmation d'activation comporte la détermination si des données doivent être émises au moyen du premier module de communication.

Dans des modes particuliers de mise en œuvre, au cours de l'activation, le premier module de communication se connecte au premier réseau d'accès sans fil en utilisant un code d'identification indiqué dans la requête d'activation reçue du serveur.

Dans des modes particuliers de mise en œuvre, le procédé de contrôle comporte, lorsque le premier module de communication est en mode actif, l'évaluation d'un critère de retour en mode veille et, lorsque ledit critère de retour en mode veille est vérifié, la désactivation dudit premier module de communication.

Dans des modes particuliers de mise en œuvre, l'évaluation du critère de retour en mode veille comporte la détermination si des données doivent être échangées au moyen du premier module de communication.

Dans des modes particuliers de mise en œuvre, l'évaluation du critère de retour en mode veille comporte la comparaison de l'instant d'évaluation dudit critère de retour en mode veille à une date prédéterminée.

Dans des modes particuliers de mise en œuvre, l'évaluation du critère de retour en mode veille comporte l'analyse d'un niveau d'énergie électrique stockée dans une batterie du terminal.

Dans des modes particuliers de mise en œuvre, le premier réseau d'accès sans fil et le second réseau d'accès sans fil sont tous deux des réseaux étendus sans fil.

Dans des modes particuliers de mise en œuvre, le premier module de communication est compatible avec au moins un des protocoles de communication sans fil suivants : GPRS, EDGE, UMTS, HSPA, HSPA+, LTE, CDMA2000.

Dans des modes particuliers de mise en œuvre, le second module de communication émet des données sous la forme de signaux à bande ultra étroite.

Selon un second aspect, la présente invention concerne un terminal d'un système de communication sans fil, comportant un premier module de communication adapté à échanger des données avec un premier réseau d'accès sans fil, un second module de communication adapté à échanger des données avec un second réseau d'accès sans fil, de débit maximal inférieur à un débit maximal dudit premier module de communication. En outre, ledit terminal comporte des moyens configurés pour contrôler un mode veille dudit premier module de communication conformément à un procédé de contrôle selon l'un quelconque des modes de mise en œuvre de l'invention.

Selon un troisième aspect, la présente invention concerne un procédé de contrôle à distance, par un serveur, d'un mode veille d'un premier module de communication d'un terminal, contrôlé par ledit terminal conformément à un procédé de contrôle selon quelconque des modes de mise en œuvre de l'invention. En outre, le serveur étant relié au second réseau d'accès sans fil, ledit procédé de contrôle à distance comporte :
- l'évaluation d'un critère d'émission de requête d'activation du premier module de communication du terminal, comportant la détermination si le code d'identification, partagé par le groupe de terminaux auquel appartient ledit terminal, est disponible pour être utilisé par ledit terminal pour se connecter au premier réseau d'accès sans fil,
- lorsque le critère d'émission de requête d'activation est vérifié : l'émission, au moyen du second réseau d'accès sans fil, d'une requête d'activation à destination du terminal.

Dans des modes particuliers de mise en œuvre, le procédé de contrôle à distance peut comporter en outre l'une ou plusieurs des caractéristiques suivantes, prises isolément ou selon toutes les combinaisons techniquement possibles.

Dans des modes particuliers de mise en œuvre, le code d'identification partagé par le groupe de terminaux est un numéro d'abonné IMSI.

Dans des modes particuliers de mise en œuvre, ledit groupe de terminaux partageant plusieurs codes d'identification, l'évaluation du critère d'émission de requête d'activation du premier module de communication du terminal comporte la détermination si l'un des codes d'identification partagés est disponible et, lorsque le critère d'émission de requête d'activation est vérifié, la requête d'activation comporte une indication du code d'identification disponible parmi lesdits codes d'identification partagés.

Dans des modes particuliers de mise en œuvre, le procédé de contrôle à distance comporte l'écoute d'un lien montant entre le terminal et le second réseau d'accès sans fil, et le serveur évalue le critère d'émission de requête d'activation après avoir reçu une requête de confirmation d'activation émise par ledit terminal.

Dans des modes particuliers de mise en œuvre, l'évaluation du critère d'émission de requête d'activation comporte la détermination si des données doivent être émises à destination du terminal au moyen du premier réseau d'accès sans fil.

Dans des modes particuliers de mise en œuvre, l'évaluation du critère d'émission de requête d'activation comporte la comparaison d'un niveau d'utilisation, par d'autres terminaux, du premier réseau d'accès sans fil et/ou du serveur à un niveau maximal prédéterminé.

Dans des modes particuliers de mise en œuvre, l'évaluation du critère d'émission de requête d'activation comporte la détermination si un code d'identification dudit terminal, partagé avec d'autres terminaux, est disponible pour être utilisé par ledit terminal pour se connecter au premier réseau d'accès sans fil.

Selon un quatrième aspect, la présente invention concerne un serveur comportant des moyens configurés pour contrôler à distance un mode veille d'un premier module de communication d'un terminal conformément à un procédé de contrôle à distance selon l'un quelconque des modes de mise en œuvre de l'invention.

Selon un cinquième aspect, la présente invention concerne un système de communication sans fil comportant au moins un terminal selon l'un quelconque des modes de réalisation de l'invention et un serveur selon l'un quelconque des modes de réalisation de l'invention.

Dans des modes particuliers de réalisation, le système comporte un groupe de terminaux partageant un même code d'identification pour se connecter au premier réseau d'accès sans fil.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un système de communication sans fil,
- Figure 2 : un diagramme illustrant les principales étapes d'un procédé de contrôle, par un terminal, d'un mode veille d'un module de communication dudit terminal,
- Figure 3 : un diagramme illustrant un mode préféré de mise en œuvre d'un procédé de contrôle, par un terminal, d'un mode veille d'un module de communication dudit terminal,
- Figure 4 : un diagramme représentant les principales étapes d'un procédé de contrôle à distance, par un serveur, d'un mode veille d'un module de communication d'un terminal,
- Figure 5 : un diagramme représentant un mode préféré de mise en œuvre d'un procédé de contrôle à distance, par un serveur, d'un mode veille d'un module de communication d'un terminal.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

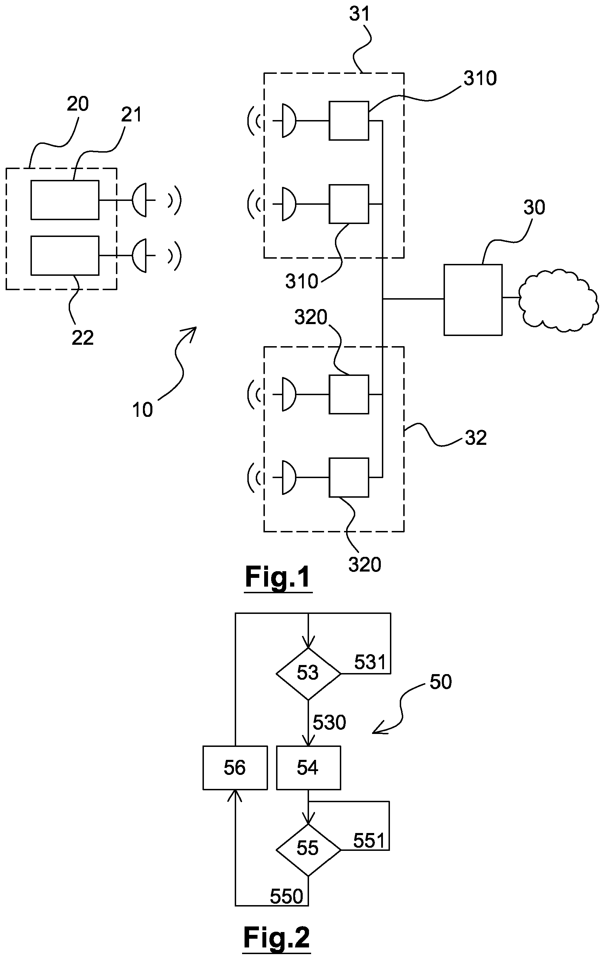

La figure 1 représente schématiquement un système 10 de communication sans fil comportant un terminal 20.

Le terminal 20 comporte un premier module 21 de communication adapté à échanger des données avec des stations de base 310 d'un premier réseau 31 d'accès sans fil, et un second module 22 de communication adapté à échanger des données avec des stations de base 320 d'un second réseau 32 d'accès sans fil. Dans l'exemple illustré par la figure 1, les stations de base 310 du premier réseau 31 d'accès sans fil sont toutes distinctes des stations de base 320 du second réseau 32 d'accès sans fil. Rien n'exclut cependant, suivant d'autres exemples, d'avoir des stations de base appartenant à la fois au premier réseau 31 d'accès sans fil et au second réseau 32 d'accès sans fil, c'est-à-dire adaptées à échanger des données à la fois avec le premier module 21 de communication et le second module 22 de communication.

Le terminal 20 échange des données avec le premier réseau 31 d'accès sans fil et le second réseau 32 d'accès sans fil sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Le premier module 21 de communication présente un débit maximal supérieur à celui du second module 22 de communication. Pour cette raison, le premier module 21 de communication et le premier réseau 31 d'accès sans fil peuvent être qualifiés de « haut débit » par rapport au second module 22 de communication et au second réseau 32 d'accès sans fil qui, a contrario, peuvent être qualifiés de « bas débit » par rapport au premier module 21 de communication et au premier réseau 31 d'accès sans fil. Du fait de cette différence entre leurs débits maximaux respectifs, le second module 22 de communication présente en principe une consommation électrique inférieure à celle du premier module 21 de communication.

Le premier module 21 de communication et le premier réseau 31 d'accès sans fil sont par exemple compatibles avec au moins un des protocoles de communication sans fil suivants : GPRS, EDGE, UMTS, HSPA, HSPA+, LTE, CDMA2000, etc.

Le second module 22 de communication et le second réseau 32 d'accès sans fil sont bas débit par rapport au premier module 21 de communication et au premier réseau 31 d'accès sans fil. Par exemple, si le premier module 21 de communication et le premier réseau 31 d'accès sans fil sont compatibles avec le protocole de communication sans fil LTE, le second module 22 de communication et le second réseau 32 d'accès sans fil peuvent être compatibles avec le protocole de communication GPRS et/ou EDGE.

Dans des modes préférés de réalisation, le second module 22 de communication du terminal 20 et le second réseau 32 d'accès sans fil du système 10 de communication sans fil échangent des données sous la forme de signaux à bande ultra étroite (UNB). De telles dispositions sont particulièrement avantageuses en ce que la consommation électrique du second module 22 de communication est alors très faible, particulièrement adaptée pour des applications du type M2M ou IoT.

Dans des modes préférés de réalisation du système 10 de communication sans fil, le premier réseau 31 d'accès sans fil et le second réseau 32 d'accès sans fil sont tous deux des réseaux étendus sans fil, également désignés par WWAN dans la littérature anglo-saxonne (« Wireless Wide Area Network »). Dans un tel cas, le terminal 20 est presque toujours dans une zone couverte à la fois par le premier réseau 31 d'accès sans fil et par le second réseau 32 d'accès sans fil.

Tel qu'illustré par la figure 1, le système 10 de communication sans fil comporte également un serveur 30. Dans l'exemple non limitatif illustré par la figure 1, le serveur 30 est relié à la fois au premier réseau 31 d'accès sans fil et au second réseau 32 d'accès sans fil. Par conséquent, le terminal 20 est adapté à échanger des données avec le serveur 30 par l'intermédiaire dudit premier réseau 31 d'accès sans fil (au moyen du premier module 21 de communication) et par l'intermédiaire du second réseau 32 d'accès sans fil (au moyen du second module 22 de communication).

Tel qu'indiqué précédemment, la présente invention concerne notamment la gestion de la consommation électrique du terminal 20, et en particulier la consommation électrique associée à l'utilisation du premier module 21 de communication.

Afin notamment de limiter la consommation électrique, le terminal 20 est adapté à placer ledit premier module 21 de communication en mode veille. Par « mode veille », on entend tout mode de fonctionnement du premier module 21 de communication dans lequel il n'est pas autorisé à échanger des données avec le premier réseau 31 d'accès sans fil, y compris un mode avion ou un arrêt complet dudit premier module 21 de communication en arrêtant de l'alimenter en énergie électrique.

Avantageusement, le terminal 20 peut également être adapté à placer le second module 22 de communication en mode veille, afin de réduire encore plus la consommation électrique dudit terminal 20.

La présente invention concerne plus particulièrement le contrôle du mode veille du premier module 21 de communication du terminal 20, c'est-à-dire le contrôle des transitions du mode veille vers un mode actif (dans lequel le premier module 21 de communication est autorisé à échanger des données avec le premier réseau 31 d'accès sans fil) et inversement.

Plus particulièrement, le contrôle du mode veille du premier module 21 de communication du terminal 20 est distribué entre le terminal 20 et le serveur 30, et se décompose principalement en :
- un procédé 50 de contrôle dont les étapes sont exécutées localement par le terminal 20,
- un procédé 60 de contrôle à distance, dont les étapes sont exécutées par le serveur 30.

Dans son principe général, le contrôle du mode veille du premier module 21 de communication du terminal 20 repose, lorsque ledit premier module 21 de communication est en mode veille, sur l'émission d'une requête d'activation par le serveur 30, au moyen du second réseau 32 d'accès sans fil, à destination du terminal 20. Lorsque le terminal 20 reçoit la requête d'activation au moyen du second module 22 de communication, ledit terminal 20 active le premier module 21 de communication. Dans le cas contraire, le premier module 21 de communication reste en mode veille.

### A) Procédé de contrôle de mode veille par le terminal

La figure 2 représente schématiquement les principales étapes d'un procédé 50 de contrôle, par le terminal 20, de mode veille du premier module 21 de communication dudit terminal 20.

A cet effet, le terminal 20 comporte notamment un dispositif de contrôle (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 50 de contrôle de mode veille. Dans une variante, le dispositif de contrôle comporte un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes du procédé 50 de contrôle de mode veille.

En d'autres termes, le terminal 20 comporte un ensemble de moyens configurés de façon logicielle (produit programme d'ordinateur spécifique) et/ou matérielle (FPGA, PLD, ASIC, composants électroniques discrets, etc.) pour mettre en œuvre les étapes du procédé 50 de contrôle de mode veille.

Tel qu'indiqué précédemment, le contrôle du mode veille du premier module 21 de communication du terminal 20 repose notamment, lorsque ledit premier module 21 de communication est en mode veille, sur l'émission d'une requête d'activation par le serveur 30, au moyen du second réseau 32 d'accès sans fil, à destination du terminal 20.

Du côté du terminal 20, le procédé 50 de contrôle de mode veille comporte par conséquent une étape 53 d'écoute d'un lien descendant entre le second réseau 32 d'accès sans fil et ledit terminal 20, au moyen du second module 22 de communication.

Lorsque le terminal 20 reçoit, au moyen du second module 22 de communication, une requête d'activation émise par le serveur 30 (référence 530 sur la figure 2), le procédé 50 de contrôle de mode veille comporte alors une étape 54 d'activation, par le terminal 20, du premier module 21 de communication. Au cours de l'étape 54 d'activation, le premier module 21 de communication quitte le mode veille pour le mode actif dans lequel il peut se connecter au premier réseau 31 d'accès sans fil pour échanger des données. Avantageusement, le second module 22 de communication peut être placé en mode veille au cours de l'étape 54 d'activation du premier module 21 de communication, afin de réduire sa consommation électrique.

A contrario, si aucune requête d'activation n'est reçue par le terminal 20 (référence 531 sur la figure 2), le premier module 21 de communication n'est pas activé et reste par conséquent en mode veille.

Dans des modes préférés de mise en œuvre, et tel qu'illustré par la figure 2, le procédé 50 de contrôle de mode veille par le terminal 20 peut comporter, lorsque le premier module 21 de communication est en mode actif, une étape 55 d'évaluation d'un critère prédéterminé de retour en mode veille. Lorsque ledit critère de retour en mode veille est vérifié (référence 550 sur la figure 2), le procédé 50 de contrôle de mode veille comporte une étape 56 de désactivation dudit premier module 21 de communication par le terminal 20, au cours de laquelle ledit premier module 21 de communication quitte le mode actif pour le mode veille. Dans le cas contraire (référence 551 sur la figure 2), le premier module 21 de communication du terminal 20 reste en mode actif.

En effet, afin de limiter la consommation électrique du terminal 20, le premier module 21 de communication est placé à nouveau en mode veille dès que des conditions prédéterminées sont remplies, et l'étape 55 d'évaluation dudit critère de retour en mode veille vise précisément à déterminer si ces conditions sont bien remplies.

Par exemple, le retour en mode veille peut être effectué à des dates prédéterminées. Notamment, il est possible de forcer un retour en mode veille lorsqu'aucun échange de données n'est effectué au moyen du premier module 21 de communication pendant une durée maximale prédéterminée.

Alternativement ou en complément, le critère de retour au mode veille peut être considéré comme vérifié lorsqu'il n'y a plus de données devant être échangées au moyen du premier module 21 de communication.

Il est également possible, alternativement ou en complément, de prendre en compte le niveau d'énergie électrique stockée dans une batterie (non représentée sur les figures) du terminal 20. Notamment, il est possible de forcer un retour au mode veille lorsque le niveau d'énergie électrique stockée dans la batterie devient inférieur à un niveau minimal prédéterminé.

Il est à noter que, alternativement ou en complément, le serveur 30 peut forcer le retour en mode veille du premier module 21 de communication du terminal 20 en envoyant une requête de désactivation au moyen du premier réseau 31 d'accès sans fil ou au moyen du second réseau 32 d'accès sans fil. Si le terminal 20 reçoit une telle requête de désactivation, le critère de retour en mode veille est considéré comme vérifié et ledit terminal 20 désactive le premier module 21 de communication.

D'autres types de critères de retour en mode veille peuvent être considérés, et le choix d'un critère particulier ne constitue qu'une variante d'implémentation de l'invention.

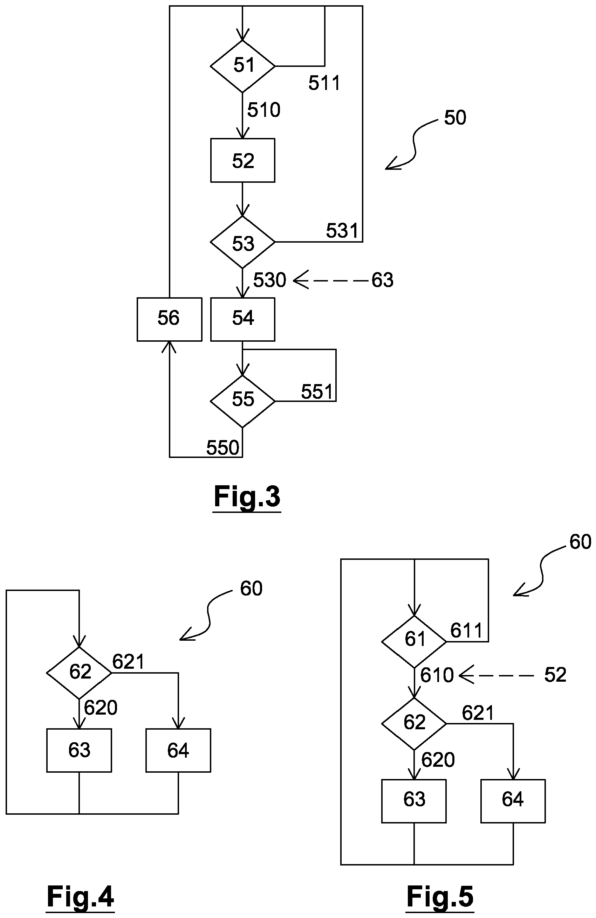

La figure 3 représente un mode préféré de mise en œuvre du procédé 50 de contrôle de mode veille par le terminal 20. Dans le mode préféré de mise en œuvre illustré par la figure 3, le serveur 30 contrôle à distance l'activation du premier module 21 de communication du terminal 20, mais à l'initiative dudit terminal 20. En effet, lorsque le terminal 20 envisage d'activer son premier module 21 de communication, il émet, au moyen du second module 22 de communication, une requête de confirmation d'activation au serveur 30. Par cette requête, ledit terminal 20 demande au serveur 30 si le premier module 21 de communication peut ou doit être activé. Si le serveur 30 répond à cette requête de confirmation d'activation par une requête d'activation, le terminal 20 active le premier module 21 de communication. Dans le cas contraire, le premier module 21 de communication du terminal 20 reste en mode veille.

Tel qu'illustré par la figure 3, le procédé 50 de contrôle de mode veille comporte tout d'abord, lorsque le premier module 21 de communication est en mode veille, une étape 51 d'évaluation d'un critère prédéterminé de requête de confirmation d'activation du premier module 21 de communication.

En effet, afin de limiter la consommation électrique du terminal 20, une requête de confirmation d'activation n'est avantageusement émise que si des conditions prédéterminées sont remplies, et l'étape 51 d'évaluation dudit critère d'émission de requête de confirmation d'activation vise précisément à déterminer si ces conditions sont bien remplies.

Par exemple, l'émission d'une requête de confirmation d'activation peut être effectuée à des dates prédéterminées. Notamment, il est possible d'émettre une requête de confirmation d'activation de manière sensiblement périodique, avec une période Te. Dans ce cas, le critère d'émission de requête de confirmation d'activation est considéré comme vérifié lorsqu'une durée Te s'est écoulée depuis l'émission précédente d'une requête de confirmation d'activation. Suivant un autre exemple, il est également possible, alternativement ou en complément, d'émettre une requête de confirmation d'activation lorsqu'une date limite de validité de données mémorisées dans le terminal 20, par exemple un micro-logiciel, a été dépassée. Dans ce cas, l'activation du premier module 21 de communication vise à mettre à jour lesdites données dont la date limite de validité a été dépassée.

Alternativement ou en complément, le critère d'émission de requête de confirmation d'activation peut être considéré comme vérifié lorsqu'il est déterminé que des données du terminal 20 doivent être émises au moyen du premier module 21 de communication. De préférence, les échanges de données du terminal 20 se font principalement au moyen du second module 22 de communication, et l'utilisation du premier module 21 de communication est limitée aux échanges d'une quantité importante de données, par exemple supérieure à une valeur seuil prédéterminée. Rien n'exclut cependant, suivant d'autres exemples, de n'utiliser le second module 22 de communication que pour contrôler le mode veille du premier module 21 de communication, lequel peut alors être utilisé pour effectuer tous les autres échanges de données.

D'autres types de critères d'émission de requête de confirmation d'activation peuvent être considérés, et le choix d'un critère particulier ne constitue qu'une variante d'implémentation de l'invention.

Tel qu'illustré par la figure 3, lorsque le critère d'émission de requête de confirmation d'activation est vérifié (référence 510 sur la figure 3), le procédé 50 de contrôle de mode veille comporte une étape 52 d'émission, au moyen du second module 22 de communication, d'une requête de confirmation d'activation au serveur 30.

Dans le cas contraire, c'est-à-dire lorsque le critère d'émission de requête de confirmation d'activation n'est pas vérifié (référence 511 sur la figure 3), aucune requête de confirmation d'activation n'est émise.

De préférence, le second module 22 de communication est également en mode veille au cours de l'étape 51 d'évaluation du critère d'émission de requête de confirmation d'activation, afin de réduire la consommation électrique du terminal 20. Le cas échéant, ledit second module 22 de communication est activé lorsque le critère d'émission de requête de confirmation d'activation est considéré comme vérifié, préalablement à l'étape 52 d'émission de la requête de confirmation d'activation à destination du serveur 30.

Tel qu'illustré par la figure 3, après avoir émis une requête de confirmation d'activation, les étapes du procédé 50 de contrôle de mode veille par le terminal 20 correspondent aux étapes du mode de mise en œuvre décrit en référence à la figure 2.

Il est à noter que le terminal 20 peut être capable de mettre en œuvre l'un seulement des modes de mise en œuvre décrits en référence aux figures 2 et 3, ou bien être capable de mettre en œuvre les deux modes de mise en œuvre décrits en référence aux figures 2 et 3, c'est-à-dire à dire être capable :
- d'émettre une requête de confirmation d'activation, et
- de recevoir une requête d'activation sans avoir émis une requête de confirmation d'activation.

### B) Procédé de contrôle à distance par le serveur

Tel qu'indiqué précédemment, le serveur 30 contrôle à distance l'activation du premier module 21 de communication du terminal 20, et la figure 4 représente schématiquement les principales étapes du procédé 60 de contrôle à distance mis en œuvre par ledit serveur 30.

A cet effet, le serveur 30 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 60 de contrôle à distance. Dans une variante, le serveur 30 comporte un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes du procédé 60 de contrôle à distance.

En d'autres termes, le serveur 30 comporte des moyens configurés de façon logicielle (produit programme d'ordinateur spécifique) et/ou matérielle (FPGA, PLD, ASIC, composants électroniques discrets, etc.) pour mettre en œuvre les différentes étapes du procédé 60 de contrôle à distance.

Tel qu'illustré par la figure 4, le procédé 60 de contrôle à distance par le serveur 30 comporte une étape 62 d'évaluation d'un critère prédéterminé d'émission de requête d'activation à destination du terminal 20.

En effet, afin de limiter la consommation électrique du terminal 20, une requête d'activation n'est avantageusement émise par le serveur 30 que si des conditions prédéterminées sont remplies, et l'étape 62 d'évaluation dudit critère d'émission de requête d'activation vise précisément à déterminer si ces conditions sont bien remplies.

Lorsque le critère d'émission de requête d'activation est vérifié (référence 620 sur la figure 4), le procédé 60 de contrôle à distance par le serveur 30 comporte une étape 63 d'émission, au moyen du second réseau 32 d'accès sans fil, d'une requête d'activation à destination du terminal 20.

Dans le cas contraire, c'est-à-dire lorsque le critère d'émission de requête d'activation n'est pas vérifié (référence 621 sur la figure 4), aucune requête d'activation n'est émise (étape 64 sur la figure 3).

La figure 5 représente les principales étapes du procédé 60 de contrôle à distance, dans le cas où le terminal 20 initie la procédure d'activation par l'émission d'une requête de confirmation d'activation, tel que décrit en référence à la figure 3. Dans ce cas, et tel qu'illustré par la figure 5, le procédé 60 de contrôle à distance comporte une étape 61 d'écoute du lien montant entre le terminal 20 et le second réseau 32 d'accès sans fil.

L'étape 61 d'écoute du lien montant est exécutée tant qu'aucune requête de confirmation d'activation n'est reçue (référence 611 sur la figure 5).

Lorsque le serveur 30 reçoit une requête de confirmation d'activation (référence 610 sur la figure 5), ledit serveur 30 exécute l'étape 62 d'évaluation du critère d'émission de requête d'activation.

Comme précédemment, lorsque le critère d'émission de requête d'activation est vérifié (référence 620 sur la figure 5), le serveur 30 émet, au moyen du second réseau 32 d'accès sans fil, une requête d'activation à destination du terminal 20. Dans le cas contraire, c'est-à-dire lorsque le critère d'émission de requête d'activation n'est pas vérifié (référence 621 sur la figure 5), aucune requête d'activation n'est émise (étape 64 sur la figure 5), c'est-à-dire qu'aucune réponse n'est émise par le serveur 30 ou bien que le serveur 30 répond au terminal 20 mais en indiquant que le premier module 21 de communication ne doit pas être activé.

De manière générale, différents types de critères d'émission de requête d'activation peuvent être considérés, et le choix d'un critère particulier ne constitue qu'une variante d'implémentation de l'invention.

Par exemple, si le terminal 20 n'a pas de données à émettre au moyen du premier module 21 de communication, l'émission d'une requête d'activation peut être conditionnée à la présence, au niveau du serveur 30, de données à émettre à destination du terminal 20 au moyen du premier réseau 31 d'accès sans fil. Dans un tel cas, l'activation peut être initiée par le serveur 30 (figures 2 et 4) ou, si elle est initiée par le terminal 20 (figures 3 et 5), l'émission de la requête de confirmation d'activation par le terminal 20 vise principalement à déterminer si le serveur 30 a des données à lui faire parvenir par l'intermédiaire du premier réseau 31 d'accès sans fil.

Alternativement ou en complément, l'émission d'une requête d'activation peut être conditionnée à la capacité du serveur 30 à échanger des données avec le terminal 20 au moyen du premier réseau 31 d'accès sans fil. Par exemple, le premier réseau 31 d'accès sans fil et/ou le serveur 30 peuvent être configurés pour accepter la connexion d'un nouveau terminal 20 au premier réseau 31 d'accès sans fil tant que le niveau d'utilisation, par d'autres terminaux, est inférieur à un niveau maximal prédéterminé. Ainsi, si le niveau maximal est atteint, le terminal 20 ne pourra pas se connecter au premier réseau 31 d'accès sans fil et/ou au serveur 30, de sorte qu'il est inutile d'activer le premier module 21 de communication. Dans un tel cas, si l'activation est initiée par le terminal 20 (figures 3 et 5), l'émission de la requête de confirmation d'activation par le terminal 20 vise principalement à vérifier la disponibilité du premier réseau 31 d'accès sans fil et du serveur 30 avant d'activer son premier module 21 de communication.

Il est à noter que, dans des modes préférés de mise en œuvre, le terminal 20 peut appartenir à un groupe de terminaux 20 partageant un même code d'identification auprès du premier réseau 31 d'accès sans fil. En d'autres termes, les terminaux 20 appartenant à ce groupe utilisent le même code d'identification pour se connecter au premier réseau 31 d'accès sans fil.

De telles dispositions sont particulièrement avantageuses en ce qu'elles permettent de réduire fortement les coûts associés à l'utilisation du premier module 21 de communication, car ces coûts sont partagés entre tous les terminaux 20 dudit groupe. Dans un tel cas, le mode veille vise également à permettre le partage dudit code d'identification par un groupe de terminaux 20. En effet, un terminal 20 en mode veille n'étant pas autorisé à échanger des données avec le premier réseau 31 d'accès sans fil, il a relâché la ressource partagée qu'est le code d'identification, qui peut être utilisée par l'un des autres terminaux 20 appartenant au même groupe.

Dans la suite de la description, on se place de manière non limitative dans le cas où les terminaux 20 dudit groupe utilisent un même numéro d'abonné IMSI pour se connecter au premier réseau 31 d'accès sans fil. Rien n'exclut cependant, suivant d'autres exemples, de considérer d'autres types de codes d'identification, et le choix d'un type particulier de code d'identification à partager entre les différents terminaux 20 du groupe ne constitue qu'une variante d'implémentation de l'invention.

A cet effet, les terminaux 20 dudit groupe peuvent être équipés de cartes SIM (« Subscriber Identity Module » dans la littérature anglo-saxonne) respectives qui sont identiques en ce qu'elles mémorisent toutes le même numéro d'abonné IMSI. Ainsi, chaque terminal 20 du groupe peut se connecter au premier réseau 31 d'accès sans fil en utilisant le numéro d'abonné IMSI partagé, et donc le numéro MSISDN (« Mobile Station International Subscriber Directory Number » dans la littérature anglo-saxonne) associé. Par contre, à tout instant, il ne peut pas y avoir plus qu'un terminal 20 dudit groupe qui est connecté audit premier réseau 31 d'accès sans fil en utilisant ledit numéro d'abonné IMSI partagé et le serveur 30 contrôle avantageusement l'accès, par les terminaux 20 dudit groupe, à l'utilisation du numéro d'abonné IMSI partagé. Dans un tel cas, l'émission d'une requête d'activation par le serveur 30 peut être conditionnée à la disponibilité du numéro d'abonné IMSI partagé. A cet effet, le serveur 30 mémorise par exemple une liste des terminaux 20 dudit groupe et le numéro d'abonné IMSI associé audit groupe, ainsi que, lorsque ledit numéro d'abonné IMSI est en cours d'utilisation par un terminal 20 dudit groupe, l'identité de ce terminal 20. Par conséquent, l'évaluation du critère d'émission d'une requête d'activation comporte dans ce cas la détermination si le numéro d'abonné IMSI associé au terminal 20 auquel la requête d'activation doit être émise est en cours d'utilisation par un autre terminal du même groupe, et le critère d'émission d'une requête d'activation est considéré comme vérifié s'il est déterminé que ledit numéro d'abonné IMSI est disponible. Par l'émission de la requête d'activation, le serveur 30 indique par conséquent au terminal 20 que le numéro d'abonné IMSI partagé est disponible. Dans un tel cas, si l'activation est initiée par le terminal 20 (figures 3 et 5), l'émission de la requête de confirmation d'activation par le terminal 20 vise principalement à vérifier la disponibilité du numéro d'abonné IMSI partagé avant d'activer son premier module 21 de communication.

Il est à noter que, dans le cas où un même numéro d'abonné IMSI est partagé par un groupe de terminaux 20, le serveur 30 doit de préférence être informé lorsqu'un terminal 20 cesse d'utiliser ledit numéro d'abonné IMSI partagé. C'est le cas lorsque le serveur 30 émet, au moyen du premier réseau 31 d'accès sans fil ou du second réseau 32 d'accès sans fil, une requête de désactivation du premier module 21 de communication. Par contre, lorsque le terminal 20 décide de désactiver le premier module 21 de communication, par exemple lorsque le critère de retour au mode veille est vérifié, il peut informer le serveur 30 de cette désactivation, au moyen du premier module 21 de communication (avant la désactivation) ou au moyen du second module 22 de communication. Alternativement ou en complément, le serveur 30 peut être relié au premier réseau 31 d'accès sans fil de telle sorte qu'il peut être informé de la déconnexion entre le terminal 20 et le premier réseau 31 d'accès sans fil.

Il est également à noter qu'un même groupe de terminaux 20 peut, dans des modes particuliers de mise en œuvre, partager plusieurs numéros d'abonnés IMSI pour se connecter au premier réseau 31 d'accès sans fil. De telles dispositions permettent de faciliter l'accès au premier réseau 31 d'accès sans fil, en particulier dans le cas d'un groupe comportant un nombre N_{T} important de terminaux 20, tout en réduisant le coût associé à l'utilisation du premier module 21 de communication dès lors que le nombre N_{C} de numéros d'abonnés IMSI partagés est inférieur au nombre N_{T} de terminaux du groupe. Dans un tel cas, l'évaluation du critère d'émission d'une requête d'activation comporte la détermination si l'un au moins des N_{C} numéros d'abonnés IMSI partagés est disponible, et ledit critère d'émission d'une requête d'activation est considéré comme vérifié s'il est déterminé que l'un desdits N_{C} numéros d'abonnés IMSI partagés est disponible. Le cas échéant, la requête d'activation émise peut indiquer quel numéro d'abonné IMSI disponible ledit terminal 20 doit utiliser pour se connecter au premier réseau 31 d'accès sans fil.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant que le premier réseau 31 d'accès sans fil et le second réseau 32 d'accès sans fil sont tous deux des réseaux étendus sans fil (WWAN). L'invention est toutefois applicable à d'autres types de réseaux sans fil y compris, notamment, des réseaux locaux sans fil (WiFi, Bluetooth, etc.). L'utilisation de réseaux étendus sans fil est toutefois avantageuse en ce qu'elle permet de limiter les réveils inutiles du premier module 21 de communication et/ou du second module 22 de communication.

En outre, l'invention a été décrite en considérant que le serveur 30 est relié à la fois au premier réseau 31 d'accès sans fil et au second réseau 32 d'accès sans fil. Toutefois, si les données échangées par le premier module 21 de communication et le premier réseau 31 d'accès sans fil ne doivent pas transiter par le serveur 30, alors ledit serveur 30 peut n'être relié qu'au second réseau 32 d'accès sans fil. C'est le cas notamment si le serveur 30 gère uniquement le contrôle à distance du mode veille du premier module 21 de communication du terminal 20.

En outre, il est à noter qu'une requête d'activation émise par le serveur 30 à un terminal 20 peut également comporter, dans des modes particuliers de mise en œuvre, des informations complémentaires à l'attention dudit terminal 20. Notamment, le serveur 30 peut indiquer que ledit terminal 20 doit respecter un délai avant d'activer le premier module 21 de communication et/ou avant d'essayer de se connecter au premier réseau 31 d'accès sans fil, afin par exemple de permettre au premier réseau 31 d'accès sans fil et au serveur 30 d'être à nouveau disponibles pour échanger des données avec le terminal 20. La durée dudit délai peut être prédéterminée et/ou incluse dans la requête d'activation émise par le serveur 30.

La description ci-avant illustre clairement que par ses différentes caractéristiques et leurs avantages, la présente invention atteint les objectifs qu'elle s'était fixés. En particulier, la présente invention permet notamment d'éviter d'activer le premier module 21 de communication du terminal 20 lorsqu'il n'y a pas de données à recevoir par l'intermédiaire du premier réseau 31 d'accès sans fil, mais également lorsque le premier réseau 31 d'accès sans fil et/ou le serveur 30 ne sont pas disponibles pour échanger des données, ou lorsqu'un code d'identification du terminal 20 auprès du premier réseau 31 d'accès sans fil, partagé avec d'autres terminaux, n'est pas disponible.

## Revendications

1. Procédé (50) de contrôle, par un terminal (20), d'un mode veille d'un premier module (21) de communication dudit terminal (20), adapté à échanger des données avec un premier réseau (31) d'accès sans fil, ledit terminal (20) comportant un second module (22) de communication adapté à échanger des données avec un second réseau (32) d'accès sans fil, de débit maximal inférieur à un débit maximal dudit premier module (21) de communication, ledit procédé (50) de contrôle comporte, lorsque le premier module (21) de communication est en mode veille, l'écoute (53), au moyen du second module (22) de communication, d'un lien descendant entre le second réseau (32) d'accès sans fil et le terminal (20), **caractérisé en ce que**, ledit terminal (20) appartenant à un groupe de terminaux partageant un même code d'identification pour se connecter audit premier réseau (31) d'accès sans fil,
- lorsque le terminal (20) reçoit, au moyen du second module (22) de communication, une requête d'activation, émise par un serveur (30) relié au second réseau (32) d'accès sans fil, indiquant la disponibilité du code d'identification : l'activation (54) du premier module (21) de communication au cours de laquelle ledit premier module (21) de communication se connecte au premier réseau (31) d'accès sans fil en utilisant ledit code d'identification.

2. Procédé (50) selon la revendication 1, dans lequel le code d'identification partagé par le groupe de terminaux est un numéro d'abonné IMSI.

3. Procédé (50) selon l'une des revendications 1 à 2, dans lequel, ledit groupe de terminaux partageant plusieurs codes d'identification, la requête d'activation reçue comporte une indication du code d'identification disponible parmi lesdits codes d'identification partagés et, au cours de l'activation (54), le premier module (21) de communication se connecte au premier réseau (31) d'accès sans fil en utilisant le code d'identification indiqué dans la requête d'activation reçue du serveur (30).

4. Procédé (50 selon l'une des revendications précédentes, comportant :
- l'évaluation (51) d'un critère d'émission de requête de confirmation d'activation du premier module (21) de communication,
- lorsque le critère d'émission de requête de confirmation d'activation est vérifié : l'émission (52), au moyen du second module (22) de communication, d'une requête de confirmation d'activation à destination du serveur (30),
et dans lequel le terminal (20) écoute le lien descendant après avoir émis la requête de confirmation d'activation, dans l'attente d'une requête d'activation émise par le serveur (30) en réponse à ladite requête de confirmation d'activation.

5. Procédé (50) selon la revendication 4, dans lequel l'évaluation (51) du critère d'émission de requête de confirmation d'activation comporte la comparaison de l'instant d'évaluation dudit critère d'émission de requête de confirmation d'activation à une date prédéterminée.

6. Procédé (50) selon l'une des revendications 4 à 5, dans lequel l'évaluation (51) du critère d'émission de requête de confirmation d'activation comporte la détermination si des données doivent être émises au moyen du premier module (21) de communication.

7. Procédé (50) selon l'une des revendications précédentes, dans lequel le premier réseau (31) d'accès sans fil et le second réseau (32) d'accès sans fil sont tous deux des réseaux étendus sans fil.

8. Terminal (20) d'un système de communication sans fil, comportant un premier module (21) de communication adapté à échanger des données avec un premier réseau (31) d'accès sans fil, un second module (22) de communication adapté à échanger des données avec un second réseau (32) d'accès sans fil, de débit maximal inférieur à un débit maximal dudit premier module (21) de communication, **caractérisé en ce que** ledit terminal (20) comporte des moyens configurés pour contrôler un mode veille dudit premier module (21) de communication conformément à un procédé (50) de contrôle selon l'une des revendications précédentes.

9. Procédé (60) de contrôle à distance, par un serveur (30), d'un mode veille d'un premier module (21) de communication d'un terminal (20), contrôlé par ledit terminal (20) conformément à la revendication 1, **caractérisé en ce que**, le serveur (30) étant relié au second réseau (32) d'accès sans fil, ledit procédé (60) de contrôle à distance comporte :
- l'évaluation (62) d'un critère d'émission de requête d'activation du premier module (21) de communication du terminal (20), comportant la détermination si le code d'identification, partagé par le groupe de terminaux auquel appartient ledit terminal (20), est disponible pour être utilisé par ledit terminal pour se connecter au premier réseau (31) d'accès sans fil,
- lorsque le critère d'émission de requête d'activation est vérifié : l'émission (63), au moyen du second réseau (32) d'accès sans fil, d'une requête d'activation à destination du terminal (20).

10. Procédé (50) selon la revendication 9, dans lequel le code d'identification partagé par le groupe de terminaux est un numéro d'abonné IMSI.

11. Procédé (50) selon l'une des revendications 9 à 10, dans lequel, ledit groupe de terminaux partageant plusieurs codes d'identification, l'évaluation (62) du critère d'émission de requête d'activation du premier module (21) de communication du terminal (20) comporte la détermination si l'un des codes d'identification partagés est disponible et, lorsque le critère d'émission de requête d'activation est vérifié, la requête d'activation comporte une indication du code d'identification disponible parmi lesdits codes d'identification partagés.

12. Procédé (60) selon l'une des revendications 9 à 11, comportant l'écoute (61) d'un lien montant entre le terminal (20) et le second réseau (32) d'accès sans fil, et dans lequel le serveur (30) évalue le critère d'émission de requête d'activation après avoir reçu une requête de confirmation d'activation émise par ledit terminal (20).

13. Procédé (60) selon l'une des revendications 9 à 12, dans lequel l'évaluation (62) du critère d'émission de requête d'activation comporte en outre la détermination si des données doivent être émises à destination du terminal (20) au moyen du premier réseau (31) d'accès sans fil.

14. Procédé (60) selon l'une des revendications 9 à 13, dans lequel l'évaluation (62) du critère d'émission de requête d'activation comporte en outre la comparaison d'un niveau d'utilisation, par d'autres terminaux, du premier réseau (31) d'accès sans fil et/ou du serveur (30) à un niveau maximal prédéterminé.

15. Serveur (30) **caractérisé en ce qu'**il comporte des moyens configurés pour contrôler à distance un mode veille d'un premier module (21) de communication d'un terminal (20) conformément à un procédé (60) de contrôle à distance selon l'une des revendications 9 à 14.

16. Système (10) de communication sans fil, **caractérisé en ce qu'**il comporte un groupe de terminaux (20) selon la revendication 8 et un serveur (30) selon la revendication 15.

## Patentansprüche

1. Verfahren (50) zur Steuerung, über ein Endgerät (20), eines Schlafmodus eines ersten Kommunikationsmoduls (21) des Endgeräts (20), das ausgelegt ist, um Daten mit einem ersten Netz (31) mit drahtlosem Zugriff auszutauschen, wobei das Endgerät (20) ein zweites Kommunikationsmodul (22) umfasst, das ausgelegt ist, um Daten mit einem zweiten Netz (32) mit drahtlosem Zugriff mit einem maximalen Durchsatz, der geringer als ein maximaler Durchsatz des ersten Kommunikationsmoduls (21) ist, auszutauschen, wobei wenn das erste Kommunikationsmodul (21) im Schlafmodus ist, das Verfahren (50) zur Steuerung umfasst:
- den Empfang (53) mit Hilfe des zweiten Kommunikationsmoduls (22) einer Abwärtsstrecke zwischen dem zweiten Netz (32) mit drahtlosem Zugang und dem Endgerät (20),
**dadurch gekennzeichnet, dass** das Endgerät (20) zu einer Gruppe von Endgeräten gehört, die einen gleichen Identifizierungscode teilen, um mit dem ersten Netz (31) mit drahtlosem Zugang verbunden zu sein:
- wenn das Endgerät (20) mit Hilfe des zweiten Kommunikationsmoduls (22) eine Aktivierungsabfrage erhält, gesendet von einem Server (30), der mit dem zweiten Netz (32) mit drahtlosem Zugang verbunden ist, wodurch die Verfügbarkeit des Identifizierungscodes angegeben wird: das Verfahren (50) zur Steuerung umfasst Aktivieren (54) des ersten Kommunikationsmoduls (21), im Laufe dessen das erste Kommunikationsmodul (21) mit dem ersten Netz (31) mit drahtlosem Zugang unter Verwendung des Identifizierungscodes verbunden wird.

2. Verfahren (50) nach Anspruch 1, wobei der Identifizierungscode, der von der Gruppe von Endgeräten geteilt wird, eine IMSI-Abonnentennummer ist.

3. Verfahren (50) nach einem der Ansprüche 1 bis 2, wobei da die Gruppe von Endgeräten mehrere Identifizierungscodes teilt, die erhaltene Aktivierungsabfrage eine Angabe des Identifizierungscodes umfasst, der unter den geteilten Identifizierungscodes verfügbar ist, und im Laufe der Aktivierung (54) das erste Kommunikationsmodul (21) mit dem ersten Netz (31) mit drahtlosem Zugang unter Verwendung des Identifizierungscodes verbunden wird, der in der erhaltenen Aktivierungsabfrage des Servers (30) angegeben wird.

4. Verfahren (50) nach einem der vorhergehenden Ansprüche, umfassend:
- die Bewertung (51) eines Sendekriteriums zur Abfrage der Aktivierungsbetätigung des ersten Kommunikationsmoduls (21),
- wenn das Sendekriterium zur Abfrage der Aktivierungsbestätigung verifiziert ist: Senden (52), mit Hilfe des zweiten Kommunikationsmoduls (22), einer Abfrage der Aktivierungsbestätigung Richtung Server (30), und wobei das Endgerät (20) die Abwärtsstrecke, nachdem die Abfrage der Aktivierungsbestätigung gesendet wurde, in Erwartung einer Aktivierungsabfrage empfängt, die vom Server (30) in Reaktion auf die Abfrage der Aktivierungsbestätigung gesendet wird.

5. Verfahren (50) nach Anspruch 4, wobei die Bewertung (51) des Sendekriteriums zur Abfrage der Aktivierungsbestätigung den Vergleich des Bewertungszeitpunkts des Sendekriteriums zur Abfrage der Aktivierungsbestätigung mit einem vorbestimmten Datum aufweist.

6. Verfahren (50) nach einem der Ansprüche 4 bis 5, wobei die Bewertung (51) des Sendekriteriums zur Abfrage der Aktivierungsbestätigung die Bestimmung umfasst, ob Daten mit Hilfe des ersten Kommunikationsmoduls (21) gesendet werden müssen.

7. Verfahren (50) nach einem der vorhergehenden Ansprüche, wobei das erste Netz (31) mit drahtlosem Zugang und das zweite Netz (32) mit drahtlosem Zugang beide erweiterte drahtlose Netze sind.

8. Endgerät (20) eines drahtlosen Kommunikationssystems, umfassend ein erstes Kommunikationsmodul (21), das ausgelegt ist, um Daten mit einem ersten Netz (31) mit drahtlosem Zugriff auszutauschen, ein zweites Kommunikationsmodul (22), das ausgelegt ist, um Daten mit einem zweiten Netz (32) mit drahtlosem Zugriff mit einem maximalen Durchsatz, der geringer als ein maximaler Durchsatz des ersten Kommunikationsmoduls (21) ist, auszutauschen, **dadurch gekennzeichnet, dass** das Endgerät (20) Mittel umfasst, die konfiguriert sind um einen Schlafmodus des ersten Kommunikationsmoduls (21) gemäß einem Steuerverfahren (50) nach einem der vorhergehenden Ansprüche zu steuern.

9. Verfahren (60) zur Fernsteuerung, durch einen Server (30), eines Schlafmodus eines ersten Kommunikationsmoduls (21) eines Endgeräts (20), gesteuert durch das Endgerät (20) gemäß Anspruch 1, **dadurch gekennzeichnet, dass**, da der Server (30) mit dem zweiten Netz (32) mit drahtlosem Zugang verbunden ist, das Verfahren (60) zur Fernsteuerung Folgendes umfasst:
- Bewerten (62) eines Kriteriums zur Sendung einer Aktivierungsabfrage des ersten Kommunikationsmoduls (21) des Endgeräts (20), umfassend die Bestimmung, ob der Identifizierungscode, der von der Gruppe von Endgeräten geteilt wird, zu denen das Endgerät (20) gehört, zur Verfügung steht, um von dem Endgerät verwendet zu werden, um mit dem ersten Netz (31) mit drahtlosem Zugang verbunden zu werden,
- wenn das Kriterium zur Sendung einer Aktivierungsabfrage verifiziert ist: Senden (63), mit Hilfe des zweiten Netzes (23) mit drahtlosem Zugang, einer Aktivierungsabfrage Richtung des Endgeräts (20).

10. Verfahren (50) nach Anspruch 9, wobei der Identifizierungscode, der von der Gruppe von Endgeräten geteilt wird, eine IMSI-Abonnentennummer ist.

11. Verfahren (50) nach einem der Ansprüche 9 bis 10, wobei da die Gruppe von Endgeräten mehrere Identifizierungscodes teilt, die Bewertung (62) eines Sendekriteriums zur Aktivierungsabfrage des ersten Kommunikationsmoduls (21) des Endgeräts (20) die Bestimmung umfasst, ob einer der geteilten Identifizierungscodes zur Verfügung steht, und, wenn das Kriterium der Sendung einer Aktivierungsabfrage verifiziert ist, die Aktivierungsabfrage eine Angabe des Identifizierungscodes umfasst, der unter den geteilten Identifizierungscodes verfügbar ist.

12. Verfahren (60) nach einem der Ansprüche 9 bis 11, umfassend Empfangen (61) einer Aufwärtsstrecke zwischen dem Endgerät (20) und dem zweiten Netz (32) mit drahtlosem Zugang, und wobei der Server (30) das Sendekriterium zur Aktivierungsabfrage bewertet, nachdem er eine Abfrage der Aktivierungsbestätigung, die von dem Endgerät (20) gesendet wurde, erhalten hat.

13. Verfahren (60) nach einem der Ansprüche 9 bis 12, wobei die Bewertung (62) des Sendekriteriums zur Aktivierungsabfrage außerdem die Bestimmung umfasst, ob Daten Richtung des Endgeräts (20) mit Hilfe des ersten Netzes (31) mit drahtlosem Zugang gesendet werden müssen.

14. Verfahren (60) nach einem der Ansprüche 9 bis 13, wobei die Bewertung (62) des Sendekriteriums zur Aktivierungsabfrage außerdem den Vergleich eines Verwendungsniveaus durch andere Endgeräte des ersten Netzes (31) mit drahtlosem Zugang und/oder des Servers (30) mit einem vorbestimmten maximalen Niveau umfasst.

15. Server (30), **dadurch gekennzeichnet, dass** er Mittel umfasst, die konfiguriert sind, um einen Schlafmodus eines ersten Kommunikationsmoduls (21) eines Endgeräts (20) gemäß einem Verfahren zur Fernsteuerung (60) nach einem der Ansprüche 9 bis 14 fernzusteuern.

16. Drahtloses Kommunikationssystem (10), **dadurch gekennzeichnet, dass** es eine Gruppe von Endgeräten (20) nach Anspruch 8 und einen Server (30) nach Anspruch 15 umfasst.

## Claims

1. A method (50) for controlling, by a terminal (20), a standby mode of a first communication module (21) of said terminal (20), suitable for exchanging data with a first wireless access network (31), said terminal (20) including a second communication module (22) suitable for exchanging data with a second wireless access network (32), with a maximum throughput lower than a maximum throughput of said first communication module (21), said control method (50) includes, when the first communication module (21) is in standby mode:
- listening (53), by way of the second communication module (22), to a downlink between the second wireless access network (32) and the terminal (20),
**characterized in that**, said terminal (20) belonging to a group of terminals sharing one and the same identification code for connecting to said first wireless access network (31), said control method (50) includes:
- when the terminal (20) receives, by way of the second communication module (22), an activation request, transmitted by a server (30) linked to the second wireless access network (32), indicating the availability of the identification code: activation (54) of the first communication module (21), during which activation said first communication module (21) connects to the first wireless access network (31) using said identification code.

2. The method (50) as claimed in claim 1, wherein the identification code shared by the group of terminals is an IMSI subscriber number.

3. The method (50) as claimed in either of claims 1 and 2, wherein, said group of terminals sharing a plurality of identification codes, the received activation request includes an indication of the available identification code from among said shared identification codes and, during the activation (54), the first communication module (21) connects to the first wireless access network (31) using the identification code indicated in the activation request received from the server (30).

4. The method (50) as claimed in one of the preceding claims, including:
- evaluating (51) a criterion for transmitting a request to confirm activation of the first communication module (21),
- when the criterion for transmitting an activation confirmation request is met: transmitting (52), by way of the second communication module (22), an activation confirmation request to the server (30),
and wherein the terminal (20) listens to the downlink after having transmitted the activation confirmation request, waiting for an activation request transmitted by the server (30) in response to said activation confirmation request.

5. The method (50) as claimed in claim 4, wherein evaluating (51) the criterion for transmitting an activation confirmation request includes comparing the instant in time of the evaluation of said criterion for transmitting an activation confirmation request with a predetermined date.

6. The method (50) as claimed in either of claims 4 and 5, wherein evaluating (51) the criterion for transmitting an activation confirmation request includes determining whether data have to be transmitted by way of the first communication module (21).

7. The method (50) as claimed in one of the preceding claims, wherein the first wireless access network (31) and the second wireless access network (32) are both wireless wide area networks.

8. A terminal (20) of a wireless communication system, including a first communication module (21) suitable for exchanging data with a first wireless access network (31), a second communication module (22) suitable for exchanging data with a second wireless access network (32), with a maximum throughput lower than a maximum throughput of said first communication module (21), **characterized in that** said terminal (20) includes means that are configured to control a standby mode of said first communication module (21) in accordance with a control method (50) as claimed in any one of the preceding claims.

9. A method (60) for remotely controlling, by a server (30), a standby mode of a first communication module (21) of a terminal (20), controlled by said terminal (20) in accordance with claim 1, **characterized in that**, the server (30) being linked to the second wireless access network (32), said remote control method (60) includes:
- evaluating (62) a criterion for transmitting a request to activate the first communication module (21) of the terminal (20), including determining whether the identification code, shared by the group of terminals to which said terminal (20) belongs, is available for use by said terminal to connect to the first wireless access network (31),
- when the criterion for transmitting an activation request is met: transmitting (63), by way of the second wireless access network (32), an activation request to the terminal (20).

10. The method (50) as claimed in claim 9, wherein the identification code shared by the group of terminals is an IMSI subscriber number.

11. The method (50) as claimed in either of claims 9 and 10, wherein, said group of terminals sharing a plurality of identification codes, evaluating (62) the criterion for transmitting a request to activate the first communication module (21) of the terminal (20) includes determining whether one of the shared identification codes is available and, when the criterion for transmitting an activation request is met, the activation request includes an indication of the available identification code from among said shared identification codes.

12. The method (60) as claimed in one of claims 9 to 11, including listening (61) to an uplink between the terminal (20) and the second wireless access network (32), and wherein the server (30) evaluates the criterion for transmitting an activation request after having received an activation confirmation request transmitted by said terminal (20).

13. The method (60) as claimed in one of claims 9 to 12, wherein evaluating (62) the criterion for transmitting an activation request furthermore includes determining whether data have to be transmitted to the terminal (20) by way of the first wireless access network (31).

14. The method (60) as claimed in one of claims 9 to 13, wherein evaluating (62) the criterion for transmitting an activation request furthermore includes comparing a level of use, by other terminals, of the first wireless access network (31) and/or of the server (30) with a predetermined maximum level.

15. A server (30), **characterized in that** it includes means that are configured to remotely control a standby mode of a first communication module (21) of a terminal (20) in accordance with a remote control method (60) as claimed in one of claims 9 to 14.

16. A wireless communication system (10), **characterized in that** it includes a group of terminals (20) as claimed in claim 8 and a server (30) as claimed in claim 15.
